# EUROPÄISCHE PATENTSCHRIFT

(11) **EP 2 225 921 B1**
(45) Veröffentlichungstag und Bekanntmachung des Hinweises auf die Patenterteilung: **18.04.2012**
(21) Anmeldenummer: 08856222.8
(22) Anmeldetag: 28.11.2008
(51) Int. Cl.: H05K 1/02, H05K 5/02, G06F 21/00

(54) **SICHERUNGSEINRICHTUNG UND SICHERHEITSKAPPENANORDNUNG MIT SPRÖDEM DECKELEMENT**
RETAINING DEVICE AND SAFETY CAP ARRANGEMENT HAVING BRITTLE COVER ELEMENT
DISPOSITIF DE PROTECTION ET AGENCEMENT DE CACHE DE SÉCURITÉ AVEC ÉLÉMENT DE COUVERTURE FRIABLE

(30) Priorität: 03.12.2007 DE 102007057948
(43) Veröffentlichungstag der Anmeldung: 08.09.2010
(73) Patentinhaber: Hypercom GmbH, 36251 Bad Hersfeld (DE)
(72) Erfinder: RUDOLPH, Tom, 36272 Niederaula (DE)
(74) Vertreter: Maiwald Patentanwalts GmbH
(86) Internationale Anmeldenummer: PCT/EP2008/066429
(87) Internationale Veröffentlichungsnummer: WO 2009/071489

(56) Entgegenhaltungen:
- EP-A- 1 054 316
- DE-A1-102006 017 506
- DE-B3-102006 047 330
- DE-U1- 20 321 253

## Beschreibung

Die Erfindung betrifft eine Sicherungseinrichtung mit einem gegen Manipulation von außen geschützten Raum, in dem sensible Hardware aufgenommen sein kann. Ferner betrifft die Erfindung eine Sicherheitskappenanordnung, die z.B. mit einer Platine kombiniert werden kann, um eine solche Sicherungseinrichtung zu bilden.

Sicherungseinrichtungen im Sinne dieser Anmeldung können dazu dienen, Hardwarekomponenten wie z.B. Elektronikbausteine oder Chips vor unberechtigtem Zugriff zu schützen. Dies kann z.B. bei so genannten Pinpads, wie sie unter anderem bei Bankautomaten eingesetzt werden, um über eine Tastatur einen Code einzugeben, nötig sein. Ein Pinpad beinhaltet sicherheitskritische Hardwarekomponenten, in denen z.B. Schlüssel oder personenbezogene Daten gespeichert sein können. Um die üblicherweise auf einer Platine angeordneten Hardwarekomponenten gegen Manipulation oder das Abgreifen von Daten von Außen zu sichern, können sie im Innern einer Sicherungseinrichtung aufgenommen und durch diese geschützt werden. Eine solche Sicherungseinrichtung ist in der Regel derart ausgestaltet, dass ein Versuch erkannt wird, die Sicherungseinrichtung anzugreifen, zu umgehen, zu zerstören, sicherheitsrelevante Informationen zu entnehmen oder zu verfälschen. Eine Hardwareschutzschaltung im Inneren der Sicherungseinrichtung erkennt einen derartigen Angriffsversuch und kann in geeigneter Weise reagieren. Falls sich im Inneren der Sicherungseinrichtung geheim zu haltende Informationen befinden, können diese Informationen bei einem Angriffsversuch z.B. gelöscht und somit vor unberechtigtem Zugriff geschützt werden.

Als Sicherungseinrichtungen sind Kunststoffgehäuse bekannt, bei denen auf der Innenseite einer sogenannten Sicherheitskappe feine Leiterbahnen aufgebracht sind. Die Sicherheitskappe wird auf der Platine, auf der sich die zu schützende Hardware befindet, beispielsweise durch Verkleben, Verschrauben oder Auflöten befestigt. Die Sicherheitskappe und die Platine umgeben zusammen einen zu schützenden Raum. Bei einem Versuch, eine montierte Sicherheitskappe von der Platine zu entfernen, sollen Leiterbahnen beschädigt und somit ein Alarm ausgelöst werden. Die feinen Leiterbahnen auf der Kappeninnenseite sollen ein Durchbohren verhindern, da in diesem Fall meist mindestens eine der Leiterbahnen unterbrochen oder beschädigt wird oder mehrere Leiterbahnen kurzgeschlossen werden. Sicherungseinrichtungen sind aus DE 10 2006 017506 A1 und EP-A-1 054 316 bekannt. Allerdings können herkömmliche Sicherungseinrichtungen einen Angriff nicht in allen Fällen zuverlässig verhindern.

Es ist daher insbesondere eine Aufgabe der vorliegenden Erfindung, eine Sicherheitskappenanordnung bzw. eine Sicherungseinrichtung bereitzustellen, bei der ein in der Sicherungseinrichtung befindlicher Raum weitestgehend gegen Manipulation von außen geschützt ist.

Gemäß einem ersten Aspekt betrifft die Erfindung eine Sicherheitskappenanordnung zur Kapselung eines gegen Manipulation zu schützenden Raums, nach Anspruch 1 wobei die Sicherheitskappenanordnung eine Sicherheitskappe und ein Deckelement aufweist. Die Sicherheitskappe ist derart ausgebildet, dass sie an einer Platine an einer ringförmig geschlossenen Kontaktfläche so anliegen kann, dass der zu schützende Raum vollständig von der Kombination aus Platine und Sicherheitskappe umschlossen ist. Die Sicherheitskappe weist eine erste von der ringförmig geschlossenen Kontaktfläche begrenzte Schutzfläche mit einem ersten elektrish leitfähigen Muster aus mindestens einer Leiterbahn auf. Das Deckelement ist lediglich an einer Teiloberfläche der Sicherheitskappe angeordnet. Das Deckelement ist mit einem spröden Material ausgebildet und weist ein zweites elektrisch leitfähiges Muster aus mindestens einer Leiterbahn auf. Das zweite elektrisch leitfähige Muster ist feiner als das erste elektrisch leitfähige Muster. Nachfolgend werden mögliche Merkmale und Vorteile der Erfindung dargelegt.

Die Sicherheitskappenanordnung besteht aus mindestens zwei Elementen, nämlich der Sicherheitskappe und dem Deckelement, kann aber auch weitere Elemente aufweisen.

Die Sicherheitskappe ist derart ausgebildet, dass sie zusammen z.B. mit einer Platine einen zu schützenden Raum so umgeben kann, dass man von außen keinen Zugang mehr zu dem Raum erlangen kann, ohne die Platine oder die Sicherheitskappe zu beschädigen oder die Sicherheitskappe von der Platine zu trennen. Die Sicherheitskappe kann aus einem kostengünstigen und einfach zu verarbeitenden Kunststoff hergestellt sein. Sie kann beispielsweise die Form eines viereckigen Pyramidenstumpfs aufweisen. Der äußere Rand der Sicherheitskappe kann eine ringförmig geschlossene Kontaktfläche bilden, die bündig an der jeweiligen Platine anliegen kann. Die ringförmig geschlossene Kontaktfläche kann kreisförmig oder eckig sein und kann, muss sich aber nicht notwendigerweise innerhalb einer Ebene erstrecken.

Die von der ringförmig geschlossenen Kontaktfläche begrenzte Schutzfläche kann zum Beispiel eine zu dem zu schützenden Raum gerichtete Innenoberfläche der Sicherheitskappe sein. An dieser Innenoberfläche kann das erste elektrisch leitfähige Muster ausgebildet sein. Ein elektrisch leitfähiges Muster kann aus einer oder mehreren Leiterbahnen bestehen. Unter einer Leiterbahn sei eine elektrisch leitfähige Struktur verstanden, die eine Haupterstreckungsrichtung aufweist und quer zu dieser Haupterstreckungsrichtung eine Breite von zum Beispiel wenigen 100 µm aufweist. Die Leiterbahnen sind so über die Schutzfläche der Sicherheitskappe verteilt, dass benachbarte Abschnitte einer einzelnen Leiterbahn oder zweier separater Leiterbahnen möglichst nahe nebeneinander liegen, sich jedoch nicht berühren oder kreuzen, so dass ein elektrischer Kontakt vermieden wird. Die Leiterbahn(en) erstrecken sich vorzugsweise über die gesamte Schutzfläche der Sicherheitskappe, so dass nur diejenigen Bereiche nicht von einer Leiterbahn bedeckt sind, die benötigt werden, um die Leiterbahnabschnitte elektrisch voneinander zu isolieren. Die Leiterbahn(en) reichen vorzugsweise jeweils bis zu einem Rand der Sicherheitskappe, das heißt bis zu der ringförmig geschlossenen Kontaktfläche, an der die Sicherheitskappe die Platine im zusammengebauten Zustand kontaktiert.

Durch eine solche Anordnung soll gewährleistet werden, dass es einem Angreifer nicht möglich ist, durch die Sicherheitskappe hindurch zu dem zu schützenden Raum Zugriff zu erlangen. Egal, wo der Angreifer versucht, die Sicherheitskappe zum Beispiel mit einem Bohrer zu durchdringen, wird er mit hoher Wahrscheinlichkeit einen Leiterzug des auf der Schutzfläche der Sicherheitskappe angeordneten leitfähigen Musters beschädigen, durchtrennen oder kurzschließen.

Um die Sicherheit der Sicherheitskappenanordnung weiter zu steigern, ist zusätzlich das Deckelement vorgesehen. Das Deckelement ist lediglich an einer Teiloberfläche an der Außen- oder Innenoberfläche der Sicherheitskappe vorgesehen. Das Deckelement kann insbesondere in solchen Bereichen der Sicherheitskappe vorgesehen sein, die für einen Angriff besonders empfindlich sind. Dies können zum Beispiel Bereiche sein, die im praktischen Einsatz zum Beispiel frei liegen und somit für einen Angreifer leicht zugänglich sind. Es können auch Bereiche der Sicherheitskappe sein, in denen das an der Sicherheitskappe angeordnete erste elektrisch leitfähige Muster weniger dicht ist. Zum Beispiel kann dieses erste Muster verhältnismäßig großflächige Kontaktflächen aufweisen, in denen das erste Muster elektrisch kontaktiert werden kann, um es mit einer Schutzschaltung elektrisch zu verbinden. Das Deckelement kann an der Sicherheitskappe in Bereichen solcher Kontaktflächen angeordnet sein, um diese Bereiche zusätzlich gegen Angriffe zu schützen.

Das Deckelement ist mit einem Material mit hoher Sprödigkeit ausgebildet. Die Sprödigkeit und/oder die Geometrie des Deckelements kann z.B. so gewählt sein, dass das Deckelement bei einem Versuch, es zu durchbohren, zwangsläufig bricht. Das Material kann zum Beispiel die Sprödigkeit von Glas, Silizium oder Keramik aufweisen. Da das Deckelement ähnlich wie die Sicherheitskappe auch ein elektrisch leitfähiges Muster aus mindestens einer Leiterbahn aufweist, würde ein Bruch des Deckelements eine Unterbrechung der Leiterbahn bedeuten, was von einer mit dieser Leiterbahn verbundenen Schutzschaltung detektiert werden könnte. Zum Beispiel könnte eine solche Schutzschaltung mit den Leiterbahnen sowohl des ersten als auch des zweiten leitfähigen Musters elektrisch verbunden sein und dazu ausgelegt sein, eine Änderung im elektrischen Widerstand einer der Leiterbahnen zu detektieren, wobei eine solche Änderung durch ein Beschädigen oder Durchtrennen einer Leiterbahn oder durch einen Kurzschluss zweier benachbarter Leiterbahnabschnitte bewirkt sein kann. Wird eine solche Widerstandsänderung detektiert, kann die Schutzschaltung einen Alarm auslösen und gegebenenfalls sicherheitskritische Daten, die in in dem zu schützenden Raum befindlichen Hardwarebausteinen gespeichert sind, löschen und so vor dem Zugriff des Angreifers schützen.

Gemäß einer Ausführungsform ist das Deckelement als eine dünne Scheibe mit einer Dicke von weniger als 1 mm, vorzugsweise weniger als 0,5 mm und stärker bevorzugt weniger als 0,2 mm ausgebildet. Je dünner das Deckelement ist, um so leichter bricht es bei einem mechanischen Angriffsversuch. Beim Versuch, die spröde dünne Scheibe mit mikromechanischen Mitteln zu durchdringen, kommt es somit quasi unweigerlich zu einer Unterbrechung der an dem Deckelement ausgebildeten Leiterbahnen des zweiten elektrisch leitfähigen Musters, wodurch der Angriffsversuch sehr sicher erkannt werden kann.

Um das dünne, spröde Deckelement zum Beispiel während der verschiedenen Fertigungsschritte zur Herstellung der Sicherheitskappenanordnung einfacher handhaben zu können, kann gemäß einer weiteren Ausführungsform das Deckelement zusätzlich zu einer Schicht aus sprödem Material eine Stabilisierungsschicht aus duktilem Material aufweisen. Dieses duktile Material kann zum Beispiel als Schutzfilm oder Folie vorgesehen sein, welcher zur mechanischen Stabilisierung bzw. zum Schutz der Schicht aus sprödem Material dienen kann. Das duktile Material kann zum Beispiel Kunststoff wie PE oder PVC sein.

Gemäß einer weiteren Ausführungsform ist die Breite der mindestens einen Leiterbahn des ersten leitfähigen Musters an der Sicherheitskappe mindestens zweimal, vorzugsweise mindestens fünfmal breiter als die Breite der mindestens einen Leiterbahn des zweiten leitfähigen Musters an dem Deckelement. Da das Deckelement insbesondere die besonders gefährdeten Positionen an der Sicherheitskappenanordnung schützen soll, wird für das Deckelement ein feineres Leiterbahnmuster vorgesehen. Dadurch können diese kritischen Stellen besonders gut geschützt werden. Da ferner das Deckelement kleine Abmessungen haben kann und vorzugsweise plan ist, können für die Herstellung der Leiterbahnen des zweiten elektrisch leitfähigen Musters andere gegebenenfalls aufwändigere Herstellungsverfahren wie z.B. die Verwendung eines besonders feinen Siebdrucks mit Strukturgrößen unter 200µm, vorzugsweise unter 120µm, oder Lithographieverfahren eingesetzt werden als für die Herstellung der Leiterbahnen des ersten elektrisch leitfähigen Musters der Sicherheitskappe.

Insbesondere können gemäß einer weiteren Ausführungsform die Leiterbahnen des ersten elektrisch leitfähigen Musters mittels der MID-Technologie gefertigt sein. Die MID-Technologie (Moulded Interconnected Device) ist für die Fertigung der Sicherheitskappe und deren Leiterbahnmuster besonders geeignet, da mit ihr auf einfache Weise Leiterbahnen auf dreidimensionalen Strukturen erzeugt werden können. Dabei wird ein Kunststoff mit einem Laserstrahl in bestimmten Bereichen aktiviert. Der Laserstrahl kann einem Muster gemäß kontinuierlich entlang einer Bahn gelenkt werden. In einem nachfolgenden Metallisierungsschritt wird an den derart aktivierten Bereichen Metall abgeschieden und so die Leiterbahn ausgebildet. Dies kann zum Beispiel durch Plattieren oder Galvanisieren geschehen. Mit Hilfe der MID-Technologie können in einfacher Weise Leiterbahnmuster auf einer Kunststoffsicherheitskappe erzeugt werden, wobei die herstellbaren Strukturgrößen, das heißt die erreichbare minimale Breite von Leiterbahnen bzw. der minimal erreichbare Abstand zwischen benachbarten Leiterbahnen, im Bereich weniger hundert Mikrometer, beispielsweise etwa 300µm, liegen kann.

Gemäß einer weiteren Ausführungsform sind die Leiterbahnen des zweiten leitfähigen Musters an dem Deckelement mittels Fotolithografie gefertigt. Mit Hilfe der aus der Mikroelektronik bekannten Fotolithografie lassen sich problemlos Leiterbahnen mit Strukturgrößen von weniger als 10 µm oder auch weniger als 1 µm herstellen. Strukturgrößen im Bereich von 10 µm und mehr lassen sich ohne größeren technologischen Aufwand erreichen und sind daher kostengünstig herstellbar. Kleinere Strukturgrößen erfordern zwar einen geringfügig höheren Herstellungsaufwand, führen jedoch zu einer gesteigerten durch das Deckelement bewirkten Sicherheit der Sicherheitskappenanordnung.

Gemäß einer weiteren Ausführungsform ist das erste leitfähige Muster an einer zu dem zu schützenden Raum gerichteten Innenoberfläche der Sicherheitskappe ausgebildet und das zweite elektrisch leitfähige Muster ist an einer zu dem zu schützenden Raum gerichteten Oberfläche des Deckelements ausgebildet. Somit ist keines der elektrisch leitfähigen Muster an einer Außenseite der Sicherheitskappenanordnung angeordnet, so dass sie von einem Angreifer schwierig angreifbar sind.

Gemäß einer weiteren Ausführungsform weist das erste und/oder das zweite leitfähige Muster jeweils mäanderförmig ausgebildete Leiterbahnen auf. Mit anderen Worten erstrecken sich die Leiterbahnen beider Muster entlang verschlungener, vorzugsweise unregelmäßiger Pfade. Dies erschwert es einem Angreifer, die Position der Leiterbahnen zu erkennen.

Gemäß einer weiteren Ausführungsform ist die mindestens eine Leiterbahn des ersten Musters an der Sicherheitskappe mit der mindestens einen Leiterbahn des zweiten Musters an dem Deckelement elektrisch verbunden. Beim Einsatz in einer Sicherungseinrichtung braucht somit lediglich eines der elektrisch leitfähigen Muster der Sicherheitskappenanordnung mit einer Schutzschaltung verbunden zu werden und das andere elektrisch leitfähige Muster kann über die bereits vorgesehene elektrische Verbindung zwischen den beiden Mustern mitüberwacht werden.

Vorzugsweise sind die beiden elektrisch leitfähigen Muster durch mindestens eine Ausnehmung in der Sicherheitskappe hindurch miteinander elektrisch verbunden. Die Ausnehmung in der Sicherheitskappe kann eine Öffnung sein, durch die hindurch ein Kabel oder ein sogenannter Flexverbinder hindurch verlaufen kann und die beiden Leiterbahnmuster elektrisch verbindet.

Alternativ können an der Sicherheitskappe Leiterbahnen vorgesehen sein, die die Innenoberfläche der Sicherheitskappe mit deren Außenoberfläche verbinden. Diese Leiterbahnen können dazu dienen, eine elektrische Verbindung zwischen dem an der Innenoberfläche vorgesehenen ersten Leiterbahnmuster der Sicherheitskappe und dem an dem z.B. an der Außenoberfläche anliegenden Deckelement vorgesehenen zweiten Leiterbahnmuster herzustellen.

Vorzugsweise ist das Deckelement mit der Sicherheitskappe verklebt.

Gemäß einem weiteren Aspekt der vorliegenden Erfindung ist eine Sicherungseinrichtung mit einem gegen Manipulation zu schützenden Raum vorgesehen, wobei die Sicherungseinrichtung eine Platine und eine erfindungsgemäße Sicherheitskappenanordnung, die entlang einer ringförmig geschlossenen Kontaktfläche an der Platine anliegt, aufweist. Die Platine weist dabei eine in dem zu schützenden Raum angeordnete elektrische Schutzschaltung auf, die mit Leiterbahnen der Sicherheitskappenanordnung elektrisch verbunden ist und die dazu ausgelegt ist, eine Veränderung einer elektrischen Eigenschaft einer Leiterbahn zu detektieren.

Die Sicherheitskappe kann dabei fest mit der Platine verbunden, beispielsweise verklebt, verlötet oder verschraubt, sein. Die Verbindung kann so ausgeführt sein, dass bei einem Versuch, die Sicherheitskappe von der Platine zu trennen, mindestens eine der Leiterbahnen beschädigt wird. Es können z.B. gezielt mechanische Schwachstellen am Rand der Sicherheitskappe vorgesehen sein, an denen die Sicherheitskappe bei einem Angriffsversuch bricht und dabei darunter liegende Leiterbahnabschnitte durchtrennt werden.

Die Platine kann eben sein. Alternativ kann sie eine dreidimensionale Struktur aufweisen. In letztem Fall kann die Sicherheitskappe eben ausgeführt sein. In beiden Fällen sollen die Sicherheitskappe und die Platine so aneinander angepasst sein, dass sich zwischen ihnen ein zu schützender Raum ausbildet, der vollständig durch die Sicherheitskappe und die Platine umgeben ist. Vorzugsweise ist auch die Platine selbst mit einem oder mehreren Leiterbahnmustern versehen, um auch einen Angriff auf den zu schützenden Raum von der Seite der Platine her zu verhindern.

Die Schutzschaltung kann dazu ausgelegt sein, den Widerstand einer oder mehrerer Leiterbahnen zu überwachen. Alternativ kann die Schutzschaltung einen Kurzschluss zwischen benachbarten Leiterbahnen detektieren.

Die obigen und weitere Vorteile und Merkmale der vorliegenden Erfindung ergeben sich für den Fachmann auch aus der nachfolgenden detaillierten Beschreibung bevorzugter Ausführungsformen im Zusammenhang mit den begleitenden schematischen Zeichnungen, wobei:
Fig. 1 eine Schnittansicht einer erfindungsgemäßen Sicherungseinrichtung zeigt;
Fig. 2 eine vergrößerte Schnittansicht einer Sicherungseinrichtung gemäß einer Ausführungsform der Erfindung zeigt;
Fig. 3 eine vergrößerte Schnittansicht einer Sicherungseinrichtung gemäß einer weiteren Ausführungsform der Erfindung zeigt;
Fig. 4 eine vergrößerte Schnittansicht einer Sicherungseinrichtung gemäß einer weiteren Ausführungsform der Erfindung zeigt;
Fig. 5 eine Draufsicht auf die Innenoberfläche einer Sicherheitskappe zeigt; und
Fig. 6 eine Draufsicht auf die Innenoberfläche eines Deckelements zeigt.

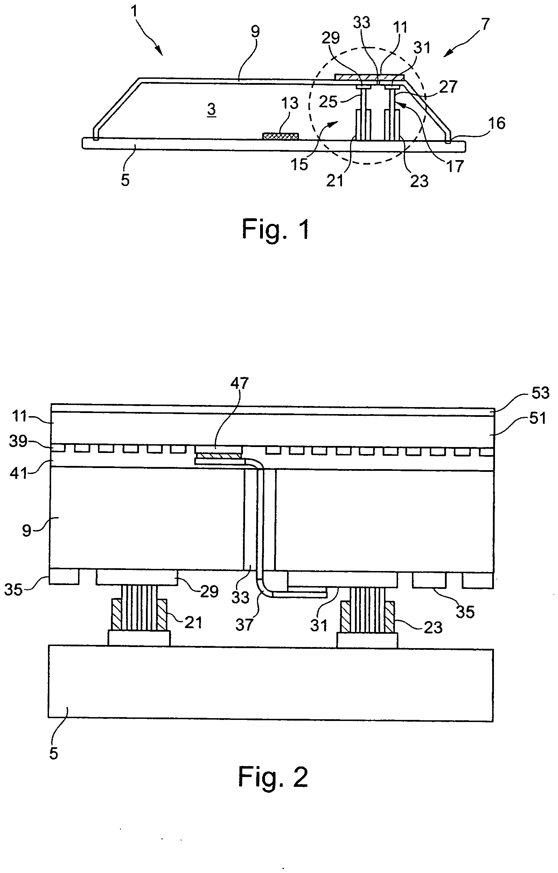

Fig. 1 zeigt eine erfindungsgemäße Sicherungseinrichtung 1 mit einem gegen Manipulation zu schützenden Raum 3, der von einer Platine 5 und einer Sicherheitskappenanordnung 7 umgeben ist. Die Sicherheitskappenanordnung 7 weist eine Sicherheitskappe 9 und ein Deckelement 11 auf. Die Sicherheitskappe 9 liegt an einer ringförmig geschlossenen Kontaktfläche 16 an der Platine 5 an. Die zu dem zu schützenden Raum 3 gerichteten Oberflächen der Platine 5, der Sicherheitskappe 9 sowie des Deckelements 11 sind mit Mustern aus Leiterbahnen versehen (in Fig. 1 nicht dargestellt), wobei die Muster den Raum 3 vollständig umgeben. In dem Raum 3 befindet sich eine Schutzschaltung 13. Die Schutzschaltung 13 ist elektrisch mit den Leiterbahnen der Platine 5 verbunden. Ferner ist sie über Kontaktelemente 15, 17 auch mit den Leiterbahnen der Sicherheitskappe 9 verbunden. Die Kontaktelemente 15, 17 weisen jeweils einen Rahmen 21, 23 und in dem Rahmen 21, 23 angeordnete elektrisch leitfähige Leitgummis 25, 27 auf und sind an der Platine 5 angebracht. Die Leitgummis 25, 27 kontaktieren die Leiterbahnen der Sicherheitskappe 9 über an den Innenseiten der Sicherheitskappe 9 vorgesehene Kontaktstellen 29, 31. Das spröde Deckelement 11 bedeckt die Sicherheitskappe 9 im Bereich der Kontaktstellen 29, 31. Durch eine Öffnung 33 in der Sicherheitskappe 9 hindurch ist das Leiterbahnmuster der Sicherheitskappe 9 mit dem Leiterbahnmuster des Deckelements 11 verbunden.

Fig. 2 zeigt eine vergrößerte Schnittansicht des in Fig. 1 gestrichelt umrandeten Bereichs. Das erste Muster mit der Leiterbahn 35 an der Sicherheitskappe 9 und die jeweiligen Kontaktstellen 29, 31 sind vergrößert dargestellt. Von der Kontaktfläche 31 aus verbindet ein durch die Öffnung 33 verlaufender Flexverbinder 37 das Leiterbahnmuster 35 der Sicherheitskappe 9 mit einer Kontaktfläche 47 des Leiterbahnmusters 39 des Deckelements 11. Das Deckelement 11 ist über eine klebende Verbindungsschicht 41 mit der Außenseite der Sicherheitskappe 9 verbunden. Das Deckelement 11 weist eine spröde Schicht 51 aus Glas und eine Stabilisierungsschicht 53 aus einer Kunststofffolie auf.

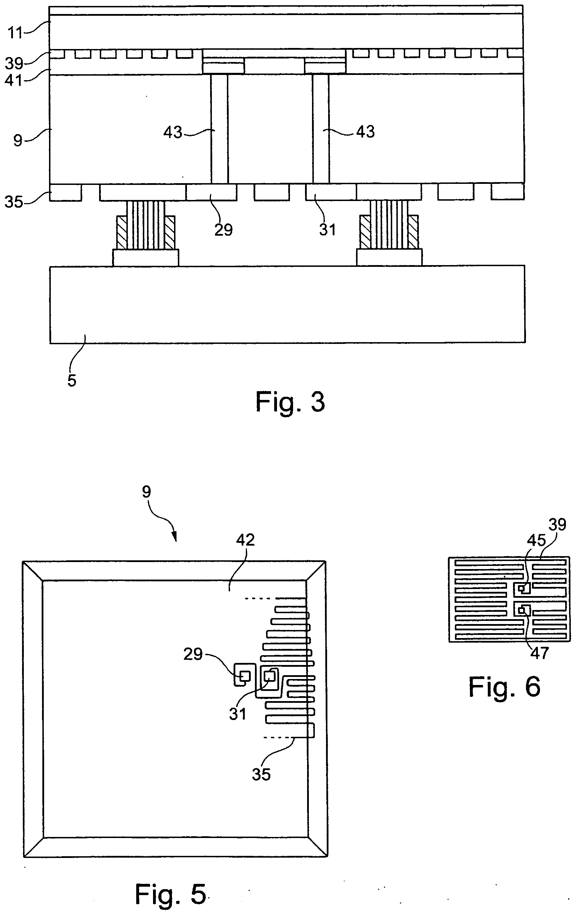

Bei der in Fig. 3 gezeigten alternativen Ausführungsform der Sicherheitskappenanordnung sind die Kontaktflächen 29, 31 anstatt über einen Flexverbinder über in die Sicherheitskappe 9 integrierte Leitelemente 43 mit dem Leiterbahnmuster 39 an dem Deckelement 11 verbunden.

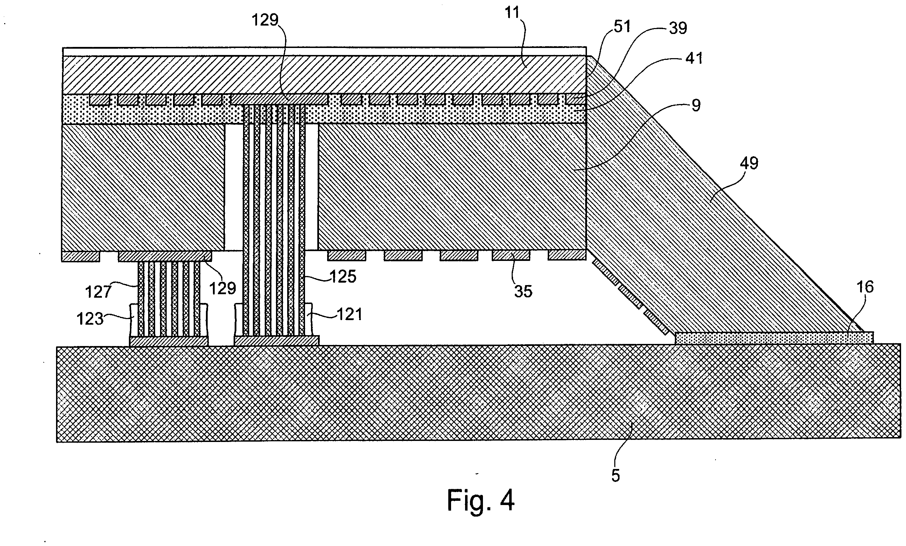

In Fig. 4 ist eine weitere alternative Ausführungsform der Sicherheitskappenanordnung dargestellt. Hierbei ist die Platine 5 über ein in einem ersten Rahmen 123 gehaltenes erstes Leitgummielement 127 und über eine Kontaktstelle 129 mit dem Leiterbahnmuster 35 der Sicherheitskappe 9 verbunden. Ein separates, in einem Rahmen 121 gehaltenes zweites Leitgummielement 125 verbindet die Platine 5 mit einer an dem Deckelement 11 vorgesehenen Kontaktstelle 129 hin zu dem zweiten Leiterbahnmuster 39. Die beiden Leiterbahnmuster der Sicherheitskappe 9 einerseits und des Deckelements 11 andererseits sind somit separat mit der Platine 5 verbunden. Somit kann auch eine in dem geschützten Raum 3 vorgesehene Schutzschaltung über die separaten Leitgummielemente 125, 127 die beiden Leiterbahnmuster 35, 39 separat kontaktieren und diese unabhängig voneinander überwachen.

In Fig. 4 ist ferner zu erkennen, dass die Sicherheitskappe 9 an ihrem Rand eine schräge Flanke 49 aufweist, wobei die zu dem geschützten Raum 3 hin gerichtete Oberfläche ebenfalls mit dem Leiterbahnmuster 35 bedeckt ist und die Sicherheitskappe 9 am unteren Rand dieser Flanke 49, das heißt an der Kontaktfläche 16 mit der Platine 5 verklebt ist.

Ferner ist in Fig. 4 zu erkennen, dass die Flanke 49 der Sicherheitskappe 9 an der Außenseite der Sicherheitskappe 9 nicht bündig mit der restlichen Oberfläche der Sicherheitskappe 9 abschließt, sondern eine nach innen versetzte Stufe 51 bildet. Auf diese Weise wird eine nach unten versetzte Ausnehmung gebildet, in die das Deckelement 11 aufgenommen werden kann, so dass dessen Oberfläche annähernd bündig mit der Flanke 49 abschließt. Das spröde Deckelement 11 ist auf diese Weise einerseits zusätzlich gegen gezielte mechanische Manipulation von den Seiten her und andererseits auch gegen versehentliche Beschädigung an diesen Stellen geschützt.

Fig. 5 zeigt eine Draufsicht auf die als Schutzfläche 42 ausgebildete Innenseite einer Sicherheitskappe 9. Es ist ein Muster aus mäanderformig angeordneten Leiterbahnen 35 erkennbar. Die Leiterbahnen 35 bedecken im Wesentlichen die gesamte Innenoberfläche der Sicherheitskappe 9 und reichen bis an den als ringförmige Kontaktfläche 15 dienenden Rand der Sicherheitskappe 9 heran. Die Leiterbahnen enden in zwei Kontaktflächen 29, 31.

In Fig. 6 ist eine Draufsicht auf die zu dem zu schützenden Raum 3 gerichtete Oberfläche eines Deckelements 11 dargestellt. Ein mäanderförmiges Muster aus feinen Leiterbahnen 39 bedeckt im Wesentlichen die gesamte Oberfläche und endet in zwei Kontaktflächen 45, 47.

## Patentansprüche

1. Sicherheitskappenanordnung (7) zur Kapselung eines gegen Manipulation zu schützenden Raums (3), wobei die Sicherheitskappenanordnung eine Sicherheitskappe (9) und ein Deckelement (11) aufweist,
wobei die Sicherheitskappe (9) derart ausgebildet ist, dass sie an einer Platine (5) an einer ringförmig geschlossenen Kontaktfläche (15) so anliegen kann, dass der zu schützende Raum (3) vollständig von der Kombination aus Platine (5) und Sicherheitskappe (9) umschlossen ist;
wobei die Sicherheitskappe (9) eine erste von der ringförmig geschlossenen Kontaktfläche (15) begrenzte Schutzfläche (42) mit einem ersten elektrisch leitfähigen Muster aus mindestens einer Leiterbahn (35) aufweist; wobei das Deckelement (11); ein zweites elektrisch leitfähiges Muster aus mindestens einer Leiterbahn (39) aufweist;
**dadurch gekennzeichnet, daß**
das Deckelement (11) lediglich an einer Teiloberfläche der Sicherheitskappe (9) angeordnet ist;
das Deckelement (11) mit einem spröden Material ausgebildet ist; und
das zweite elektrisch leitfähige Muster feiner als das erste elektrisch leitfähige Muster ist.

2. Sicherheitskappenanordnung (7) nach Anspruch 1, wobei das Deckelement (11) mit Glas, Silizium und/oder Keramik ausgebildet ist.

3. Sicherheitskappenanordnung (7) nach Anspruch 1 oder 2, wobei das Deckelement (11) eine Dicke von weniger als 1mm, vorzugsweise weniger als 0,5mm und stärker bevorzugt weniger als 0,2mm aufweist.

4. Sicherheitskappenanordnung (7) nach einem der vorangehenden Ansprüche, wobei das Deckelement (11) eine Schicht (51) aus sprödem Material und eine Stabilisierungsschicht (53) aus duktilem Material aufweist.

5. Sicherheitskappenanordnung (7) nach einem der vorangehenden Ansprüche, wobei die Breite der mindestens einen Leiterbahn (35) des ersten leitfähigen Musters mindestens 2 mal, vorzugsweise mindestens 5 mal breiter ist als die Breite der mindestens einen Leiterbahn (39) des zweiten leitfähigen Musters.

6. Sicherheitskappenanordnung (7) nach einem der vorangehenden Ansprüche, wobei die Leiterbahnen (35) des ersten Musters mittels der MID-Technologie gefertigt sind.

7. Sicherheitskappenanordnung (7) nach einem der vorangehenden Ansprüche, wobei die Leiterbahnen (39) des zweiten Musters mittels Photolithographie gefertigt sind.

8. Sicherheitskappenanordnung (7) nach einem der vorangehenden Ansprüche, wobei das erste leitfähige Muster an einer zu dem zu schützenden Raum (3) gerichteten Innenoberfläche der Sicherheitskappe (9) ausgebildet ist und wobei das zweite leitfähige Muster an einer zu dem zu schützenden Raum gerichteten Oberfläche des Deckelements (11) ausgebildet ist.

9. Sicherheitskappenanordnung (7) nach einem der vorangehenden Ansprüche, wobei das erste und das zweite leitfähige Muster jeweils mäanderförmig ausgebildete Leiterbahnen (35, 39) aufweist.

10. Sicherheitskappenanordnung (7) nach einem der vorangehenden Ansprüche, wobei mindestens eine Leiterbahn (35) des ersten Musters mit mindestens einer Leiterbahn (39) des zweiten Musters elektrisch verbunden ist.

11. Sicherheitskappenanordnung (7) nach Anspruch 10, wobei mindestens eine Leiterbahn (35) des ersten Musters durch mindestens eine Ausnehmung (33) in der Sicherheitskappe (9) hindurch mit mindestens einer Leiterbahn (41) des zweiten Musters elektrisch verbunden ist.

12. Sicherheitskappenanordnung (7) nach einem der vorangehenden Ansprüche, wobei das Deckelement (11) mit der Sicherheitskappe (9) verklebt ist.

13. Sicherungseinrichtung (1) mit einem gegen Manipulation zu schützenden Raum (3), aufweisend:
eine Platine (5); und
eine Sicherheitskappenanordnung (7) gemäß einem der Ansprüche 1 bis 12, die entlang einer ringförmig geschlossenen Kontaktfläche (15) an der Platine (5) anliegt;
wobei die Platine (5) eine in dem zu schützenden Raum (3) angeordnete elektrische Schutzschaltung (13) aufweist, die mit Leiterbahnen (35, 39) der Sicherheitskappe (9) und des Deckelements (11) elektrisch verbunden ist und die dazu ausgelegt ist, eine Veränderung einer elektrischen Eigenschaft einer Leiterbahn (35, 39) zu detektieren.

## Claims

1. A safety cap arrangement (7) for shielding a space (3) to be protected against manipulation, the safety cap arrangement comprising a safety cap (9) and a cover element (11),
the safety cap (9) being configured such that it is able to bear against a printed circuit board (5) on a contact surface (15) which is closed in an annular manner, such that the space (3) to be protected is entirely enclosed by the combination of the printed circuit board (5) and the safety cap (9);
the safety cap (9) comprising a first protective surface (42), defined by the contact surface (15) which is closed in an annular manner, with a first electrically conductive pattern consisting of at least one conductor path (35);
the cover element (11) comprising a second electrically conductive pattern consisting of at least one conductor path(39);
**characterized in that**
the cover element (11) being arranged merely on one partial surface of the safety cap (9);
the cover element (11) being formed with a brittle material;
and the second electrically conductive pattern being finer than the first electrically conductive pattern.

2. The safety cap arrangement (7) according to Claim 1, the cover element (11) being formed by glass, silicon and/or ceramics.

3. The safety cap arrangement (7) according to Claim 1 or 2, the cover element (11) having a thickness of less than 1 mm, preferably less than 0.5 mm, and further preferably less than 0.2 mm.

4. The safety cap arrangement (7) according to one of the preceding claims, the cover element (11) comprising a layer (51) made of brittle material and a stabilising layer (53) made of ductile material.

5. The safety cap arrangement (7) according to one of the preceding claims, the width of the at least one conductor path (35) of the first conductive pattern being at least twice as wide, preferably at least 5 times wider, than the width of the at least one conductor path (39) of the second conductive pattern.

6. The safety cap arrangement (7) according to one of the preceding claims, the conductor paths (35) of the first pattern being made by means of MID technology.

7. The safety cap arrangement (7) according to one of the preceding claims, the conductor paths (39) of the second pattern being made by means of photolithography.

8. The safety cap arrangement (7) according to one of the preceding claims, the first conductive pattern being configured on an internal surface of the safety cap (9) oriented towards the space (3) to be protected, and the second conductive pattern being configured on a surface of the cover element (11) oriented towards the space to be protected.

9. The safety cap arrangement (7) according to one of the preceding claims, the first and the second conductive pattern comprising in each case conductor paths (35, 39) of meandering configuration.

10. The safety cap arrangement (7) according to one of the preceding claims, at least one conductor path (35) of the first pattern being connected electrically to at least one conductor path (39) of the second pattern.

11. The safety cap arrangement (7) according to Claim 10, at least one conductor path (35) of the first pattern being electrically connected through at least one recess (33) in the safety cap (9) to at least one conductor path (41) of the second pattern.

12. The safety cap arrangement (7) according to one of the preceding claims, the cover element (11) being bonded to the safety cap (9).

13. A safety device (1) with a space (3) to be protected from manipulation, comprising:
a printed circuit board (5); and
a safety cap arrangement (7) according to one of claims 1 to 12, which bears against the printed circuit board (5) along a contact surface (15) which is closed in an annular manner;
the printed circuit board (5) comprising an electrical protective circuit (13) which is arranged in the space (3) to be protected, and which is electrically connected to conductor paths (35, 39) of the safety cap (9) and the cover element (11) and which is configured to detect an alteration of an electrical characteristic of a conductor path (35, 39).

## Revendications

1. Agencement de capot de sécurité (7) pour le blindage d'un espace (3) à protéger contre une manipulation, l'agencement de capot de sécurité comprenant un capot de sécurité (9) et un élément de couverture (11),
le capot de sécurité (9) étant réalisé de telle sorte qu'il peut s'appliquer sur une platine (5) sur une surface de contact (15) fermée en anneau, de sorte que l'espace à protéger (3) est totalement entouré par la combinaison de la platine (5) et du capot de sécurité (9) ;
le capot de sécurité (9) présentant une première surface de protection (42), délimitée par la surface de contact (15) fermée en anneau, avec un premier réseau conducteur électriquement d'au moins une piste conductrice (35) ;
l'élément de couverture (11) présentant un second réseau conducteur électriquement d'au moins une piste conductrice (39) ;
**caractérisé en ce que**
l'élément de couverture (11) est disposé uniquement sur une surface partielle du capot de sécurité (9) ;
l'élément de couverture (11) est réalisé avec un matériau fragile ; et
le second réseau conducteur électriquement est plus fin que le premier réseau conducteur électriquement.

2. Agencement de capot de sécurité (7)selon la revendication 1, dans lequel l'élément de couverture (11) est réalisé avec du verre, du silicium et/ou de la céramique.

3. Agencement de capot de sécurité (7) selon l'une des revendications 1 ou 2, dans lequel l'élément de couverture (11) présente une épaisseur de moins d'1 mm, de préférence de moins de 0,5 mm et plus préférentiellement de moins de 0,2 mm.

4. Agencement de capot de sécurité (7) selon l'une des revendications précédentes, dans lequel l'élément de couverture (11) présente une couche (51) en matériau fragile et une couche de stabilisation (53) en matériau ductile.

5. Agencement de capot de sécurité (7) selon l'une des revendications précédentes, dans lequel la largeur de la au moins une piste conductrice (35) du premier réseau conducteur est au moins 2 fois, de préférence d'au moins 5 fois plus large que la largeur de la au moins une piste conductrice (39) du second réseau conducteur.

6. Agencement de capot de sécurité (7) selon l'une des revendications précédentes, dans lequel les pistes conductrices (35) du premier réseau sont fabriquées au moyen de la technologie MID.

7. Agencement de capot de sécurité (7) selon l'une des revendications précédentes, dans lequel les pistes conductrices (39) du second réseau sont fabriquées par photolithographie.

8. Agencement de capot de sécurité (7) selon l'une des revendications précédentes, dans lequel le premier réseau conducteur est réalisé sur une surface intérieure du capot de sécurité (9), orientée en direction de l'espace (3) à protéger, et dans lequel le second réseau conducteur est réalisé sur une surface de l'élément de couverture (11), orientée en direction de l'espace à protéger.

9. Agencement de capot de sécurité (7) selon l'une des revendications précédentes, dans lequel le premier et le second réseaux conducteurs présentent chacun des pistes conductrices (35, 39) réalisées en forme de méandres.

10. Agencement de capot de sécurité (7) selon l'une des
revendications précédentes, dans lequel au moins une piste conductrice (35) du premier réseau est reliée électriquement à au moins une piste conductrice (39) du second réseau.

11. Agencement de capot de sécurité (7) selon la revendication 10, dans lequel au moins une piste conductrice (35) du premier réseau est reliée électriquement, au travers d'au moins un creux (33) du capot de sécurité (9), à au moins une piste conductrice (41) du second réseau.

12. Agencement de capot de sécurité (7) selon l'une des
revendications précédentes, dans lequel l'élément de couverture (11) est collé au capot de sécurité (9).

13. Dispositif de protection (1) avec un espace (3), à
protéger contre une manipulation, comprenant :
une platine (5) ; et
un agencement de capot de sécurité (7) selon l'une des revendications 1 à 12, qui s'applique sur la platine (5) le long d'une surface de contact (15) fermée en anneau ;
la platine (5) présentant un circuit de protection (13) électrique, disposé dans l'espace (3) à protéger, lequel circuit est relié électriquement aux pistes conductrices (35, 39) du capot de sécurité (9) et de l'élément de couverture (11) et étant conçu pour détecter une modification d'une propriété électrique d'une piste conductrice (35, 39).
